# EUROPÄISCHE PATENTANMELDUNG

(11) **EP 2 862 648 A1**
(43) Veröffentlichungstag der Anmeldung: **22.04.2015**
(21) Anmeldenummer: 13189348.9
(22) Anmeldetag: 18.10.2013
(51) Int. Cl.: B22D 21/02, B22D 31/00, B23K 26/00, B23P 6/00, B23P 6/04, C21D 1/09, B23P 15/00

(54) **Teilweises Umschmelzen von gegossenen Bauteilen und gegossene Komponente**

(71) Anmelder: Siemens Aktiengesellschaft, 80333 München (DE)
(72) Erfinder: Burbaum, Bernd, 14612 Falkensee (DE)

(57) **Zusammenfassung**

Durch das Umschmelzen neugegossener Bauteile vor dem Einsatz wird eine Verbesserung der mechanischen Eigenschaften erreicht.

## Beschreibung

Die Erfindung betrifft das Umschmelzen von gegossenen metallischen Bauteilen und eine gegossene Komponente.

Einige Komponenten für Turbinen werden gegossen.
Dabei werden oft Nickelbasis-Superlegierungen mit einem hohen Anteil intermetallischer Phasen, der sogenannten γ'-Phase verwendet.
Generell können an kritischen, d.h. thermisch und mechanisch hochbelasteten Stellen Ermüdungsrisse entstehen, die während des Betriebs weiter wachsen und so die Einsatzdauer einer gesamten Komponente einschränken.

Bisher wurden entweder die Temperaturen eingeschränkt oder noch hochfestere, teurere oder einkristalline Strukturen verwendet.

Es ist daher Aufgabe der Erfindung ein Verfahren und ein Bauteil aufzuzeigen, mit dem oben genanntes Problem gelöst wird.

Die Aufgabe durch ein Verfahren gemäß Anspruch 1 und eine gegossene Komponente gemäß Anspruch 7.

In den Unteransprüchen sind weitere vorteilhafte Maßnahmen aufgelistet, die beliebig miteinander kombiniert werden können, um weitere Vorteile zu erzielen.

Die Erfindung hat den Vorteil, dass hochbelastbarere Komponenten einfach hergestellt werden.

Es zeigen:
- Figur 1: eine Turbinenschaufel,
- Figur 2: eine Liste von Superlegierungen.

Die Figuren und die Beschreibung stellen nur Ausführungsbeispiele der Erfindung dar.

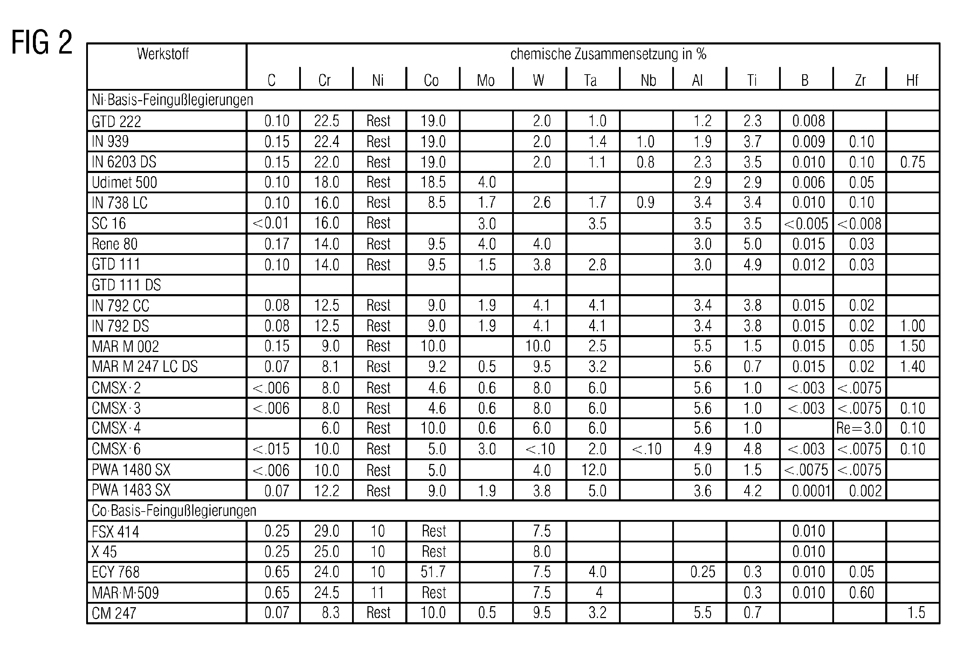

Die Komponente wird vorzugsweise aus einer nickel- oder kobaltbasierten Legierung gegossen, ganz insbesondere gemäß Figur 2.

Erfindungsgemäß wird vorgeschlagen, dass anschließend an einen Gussprozess einer neuen Komponente die für den Einsatz mechanisch kritischen Bereiche des Gussbauteils umgeschmolzen werden.

Als Energiequelle kann jede energiereiche Energiequelle verwendet werden, insbesondere wird ein Laserstrahlumschmelzverfahren verwendet.

Der umgeschmolzene Bereich ist dann frei von Poren und ggf. auch von Karbiden, die während des Umschmelzprozesses weitestgehend aufgelöst werden.
Die umgeschmolzene Struktur bzw. die Körner erstarren mit kleineren Dendritenabständen.
Dies wirkt sich alles auf die Rissbildung bezüglich der Belastung während des Einsatzes positiv aus und verlängert die Einsatzdauer der Komponente deutlich.

Vorteilhafterweise wird eine Komponente aus RENE 80 umgeschmolzen.

Durch eine sowieso durchzuführende Wärmebehandlung des Bauteils ist eine vollständige Rekonstruktion der γ/γ'-Mikrostruktur des Umschmelzbereich möglich.

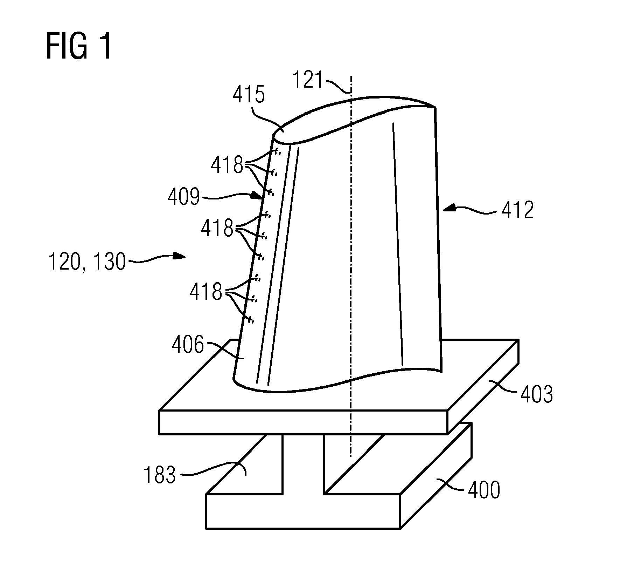

Insbesondere wird die Anströmkante 409, die Abströmkante 412 oder der Übergang zwischen Schaufelblatt 406 und Schaufelblattform 403 (filet-region) einer Turbinenschaufel 120, 130 (Figur 1) umgeschmolzen.

Dabei muss nicht die gesamte Abströmkante 412 oder gesamte Anströmkante 409 umgeschmolzen werden, sondern vorzugsweise nur ein mittlerer Bereich.

Erst dann wird die Komponente erstmalig umgesetzt oder erstmalig beschichtet.
Der umgeschmolzene Bereich weist vorzugsweise keine Risse auf.

Insbesondere sind durch den Service an den Gasturbinenmaschinen Stellen bekannt, an denen häufig Risse auftreten, so dass diese Innovation für die Notwendigkeit von umzuschmelzenden Bereichen herangezogen werden kann.

## Patentansprüche

1. Verfahren zur Neuherstellung einer gegossenen metallischen Komponente,
bei dem die Komponente gegossen wird,
und vor dem ersten Einsatz und/oder vor einer Beschichtung zumindest teilweise und höchstens teilweise umgeschmolzen wird,
und optional
anschließend zumindest eine weitere Wärmebehandlung und/oder mechanische Endbearbeitung stattfindet.

2. Verfahren nach Anspruch 1,
bei dem eine Kobalt- oder Nickelbasis-Superlegierung, insbesondere RENE 80,
umgeschmolzen wird.

3. Verfahren nach einem oder beiden der Ansprüche 1 oder 2, bei dem ein Laserstrahl zum Umschmelzen verwendet wird.

4. Verfahren nach einem oder mehreren der vorherigen Ansprüche 1, 2 oder 3,
bei dem eine Turbinenkomponente,
insbesondere eine Turbinenschaufel hergestellt wird.

5. Verfahren nach einem oder mehreren der Ansprüche,
bei dem die Komponente nach dem Umschmelzen beschichtet wird.

6. Verfahren nach einem oder mehreren der Ansprüche,
bei dem keine Risse umgeschmolzen werden.

7. Gegossene Komponente,
die zumindest teilweise und höchstens teilweise umgeschmolzene Bereiche aufweist.

8. Komponente nach Anspruch 7,
bei dem die Komponente ein neugegossenes Gussbauteil darstellt.

9. Komponente nach einem oder beiden der Ansprüche 7 oder 8,
bei dem die Komponente auf den umgeschmolzenen Bereichen beschichtet ist.

10. Komponente nach einem oder mehreren der vorherigen Ansprüche,
die eine Turbinenschaufel (120, 130) darstellt,
die höchstens teilweise umgeschmolzen ist,
und zumindest an der Anströmkante, Abströmkante und/oder Übergang zwischen Schaufelblatt und Schaufelblattform umgeschmolzen ist.

11. Komponente nach einem oder mehreren der vorherigen Ansprüche,
die keine umgeschmolzenen Risse aufweist.
